# FASCICULE DE BREVET EUROPEEN

(11) **EP 1 152 992 B1**
(45) Date de publication et mention de la délivrance du brevet: **13.11.2002**
(21) Numéro de dépôt: 00900663.6
(22) Date de dépôt: 25.01.2000
(51) Int. Cl.: C04B 7/32, C04B 35/66, C04B 28/06

(54) **LIANT HYDRAULIQUE DU TYPE CLINKER, UTILISATION ET PROCEDE DE FABRICATION D'UN TEL LIANT**
KLINKERARTIGES HYDRAULISCHES BINDEMITTEL, VERWENDUNG UND HERSTELLUNG EINES SOLCHEN BINDEMITTELS
CLINKER HYDRAULIC BINDER, USE AND METHOD FOR MAKING SAME

(30) Priorité: 26.01.1999 FR 9900842
(43) Date de publication de la demande: 14.11.2001
(73) Titulaire: Lafarge Aluminates, 75782 Paris Cedex 16 (FR)
(72) Inventeur: FALASCHI, Jean-Pierre, F-07400 Le Teil (FR); FRYDA, Hervé, F-69100 Villeurbanne (FR); LETOURNEUX, Jean-Pierre, F-38090 Villefontaine (FR); PARR, Christopher, F-78400 Chatou (FR); TOUZO, Bruno, 38500 Voiron (FR); VIALLE, Michel, Montcrachier, 38300 Crachier (FR)
(74) Mandataire: Michelet, Alain
(86) Numéro de dépôt international: FR0000167
(87) Numéro de publication internationale: WO00044684

(56) Documents cités:
- EP-A- 0 535 233
- DATABASE WPI Section Ch, Week 198520 Derwent Publications Ltd., London, GB; Class L02, AN 1985-119992 XP002118786 & JP 60 060985 A (KUROSAKI REFRACTORIES CO), 8 avril 1985 (1985-04-08)
- DATABASE WPI Section Ch, Week 198013 Derwent Publications Ltd., London, GB; Class L02, AN 1980-23035C XP002118925 & JP 55 023004 A (TOWA TAIKAKOGYO KK), 19 février 1980 (1980-02-19)
- CHEMICAL ABSTRACTS, vol. 108, no. 4, 25 janvier 1988 (1988-01-25) Columbus, Ohio, US; abstract no. 26264n, F.TAJIMA: "Spinel-based refractory linings" XP000017216 & JP 62 230677 A (NIPPON KOKAN K.K) 9 octobre 1987 (1987-10-09)
- PATENT ABSTRACTS OF JAPAN vol. 1998, no. 02, 30 janvier 1998 (1998-01-30) & JP 09 278550 A (NIPPON STEEL CORP;HARIMA CERAMIC CO LTD), 28 octobre 1997 (1997-10-28)

## Description

La présente invention est relative à un liant hydraulique du type clinker obtenu par cuisson comprenant une phase minéralogique de spinelle magnésien et au moins une phase minéralogique d'aluminate de calcium, avec une teneur en chaux inférieure à 15 % en poids sec du liant. Elle concerne également une utilisation et un procédé de fabrication d'un tel liant.

La métallurgie de l'acier en poche a évolué ces dernières années jusqu'à devenir un point clé du processus de production de l'acier. Une poche est un véritable réacteur chimique avec des températures internes pouvant atteindre 1700°C et pouvant contenir jusqu'à 300 tonnes de matière en fusion. Les bétons réfractaires (façonnés puis, de plus en plus, monolithiques) utilisés traditionnellement dans les poches acier ne sont plus satisfaisants et leurs performances dans ce domaine doivent être améliorées.

Notamment, les poches acier contiennent des couches d'usure, en contact avec l'acier et le laitier, et particulièrement exposées à l'infiltration de laitiers et à de la corrosion. Ces couches d'usure devraient être à même de résister au mieux à de telles agressions.

On s'intéresse notamment et plus spécifiquement à des bétons monolithiques à basse teneur en chaux (inférieure à 2,5 % en poids sec du béton) dits bétons LCC (Low Cément Concrete), et à très basse teneur en chaux (inférieure à 1 % en poids sec du béton) dits bétons ULCC (Ultra Low Cement Concrete). La faible teneur en chaux de ces bétons est favorable à l'obtention d'une haute réfractarité, requise pour des applications à des poches acier.

La demanderesse a exposé dans la publication UNITECR'97, vol. III, pp. 1347-1354 (1997) de N. Bunt, C. Revais et M. Vialle, intitulée " Additives in calcium aluminate cement containing castables", une étude de bétons réfractaires monolithiques coulables à base de mélange de ciment alumineux et de spinelle magnésien, et notamment à faible teneur en chaux. Le spinelle magnésien et les aluminates de calcium contenus dans le ciment alumineux y ont respectivement des fonctions de constituant réfractaire et de constituant hydraulique.

Les bétons décrits dans cette publication posent des difficultés pour obtenir une rhéologie satisfaisante et une mise en oeuvre aisée.

Il a été proposé d'autres solutions pour réaliser des bétons réfractaires au moyen d'un clinker à base de spinelle magnésien et d'aluminates de calcium.

Ainsi, le brevet FR-1.575.633 divulgue un ciment réfractaire alumineux obtenu à partir d'un mélange de 30 à 50 % de dolomie et de 50 à 70 % d'alumine calcinée, par cuisson jusqu'à clinkérisation ou fusion.

Le document FR-2.043.678 est une demande de certificat d'addition rattaché au brevet FR-1.575.633, qui décrit un ciment réfractaire alumineux à base de spinelle magnésien et d'aluminates de calcium, obtenu à partir d'un mélange de dolomie et de bauxite calcinée ou d'alumine calcinée, de chaux et de magnésie, par cuisson jusqu'à la clinkérisation ou la fusion.

La demande de brevet japonais JP-8-198649 est, quant à elle, relative à une composition de ciment ou béton réfractaire à base d'un matériau d'aluminate de calcium préparé à partir de chaux, d'alumine et de magnésie, par fusion et/ou calcination.

Les compositions des trois derniers documents mentionnés ci-dessus présentent l'inconvénient de ne pas être suffisamment bien adaptées à des applications réfractaires pour poches acier, notamment pour la réalisation de bétons LCC ou ULCC aptes à résister à l'infiltration de laitiers dans les poches acier et à la corrosion en résultant.

L'invention concerne un liant hydraulique du type clinker obtenu par cuisson particulièrement adapté à la fabrication de poches acier, et ayant notamment par rapport aux liants connus, une très bonne résistance à l'infiltration de laitiers et à la corrosion.

Le liant de l'invention permet la réalisation de bétons monolithiques réfractaires LCC ou ULCC à base de spinelle magnésien, autorisant une mise en oeuvre avec une réactivité (temps de prise) et une rhéologie (fluidité, coulage) très satisfaisantes.

L'invention concerne aussi l'utilisation d'un tel liant pour la fabrication d'un béton réfractaire.

Elle a également pour objet un procédé de fabrication d'un tel liant, permettant une mise en oeuvre aisée à partir de matières premières couramment disponibles et, avantageusement, à une température de cuisson basse (inférieure à 1800°C).

D'autres avantages que permet d'obtenir le liant de l'invention, outre la réfractarité et la résistance à l'imprégnation par des laitiers et à la corrosion, sont les suivants :
- suppression de la phase 12CaO.7Al₂O₃ (notée C₁₂A₇), excepté éventuellement dans un clinker fortement sous-cuit et seulement de manière transitoire, cette phase pouvant entraîner des difficultés de raidissement de formulations de béton ;
- microstructure du liant favorable à son broyage pour atteindre des finesses granulaires élevées, améliorant la résistance à la corrosion, et
- teneur très basse en magnésie libre résiduelle, c'est-à-dire non combinée en spinelle magnésien, permettant d'éviter la génération de fissures dues à l'hydratation de la magnésie libre en brucite pendant l'étape de mise en service du béton réfractaire obtenu à partir du liant.

L'invention a ainsi pour objet un liant hydraulique du type clinker obtenu par cuisson comprenant :
- une phase minéralogique de spinelle magnésien et
- au moins une phase minéralogique d'aluminate de calcium, avec une teneur en chaux inférieure à 15 % en poids sec du liant.

Selon l'invention, le spinelle magnésien représente entre 68 % et 81 % en poids sec du liant.

De manière surprenante, ces proportions élevées du spinelle magnésien permettent d'obtenir les avantages précités, en particulier de bonnes propriétés de résistance à la corrosion.

Par contraste, les liants connus du type clinker comprenant du spinelle magnésien et des aluminates de calcium et avec une teneur en chaux inférieure à 15 % ont des teneurs en spinelle magnésien sensiblement inférieures. En particulier, les documents FR-1.575.633 et FR-2.043.678 mentionnent des proportions comprises entre 25 et 45 % de spinelle magnésien.

Le document JP-8-198649 concerne pour sa part un liant avec une teneur en chaux comprise entre 15 % et 30 %, donc inapproprié à la fabrication de bétons LCC ou ULCC.

Par " liant du type clinker ", on inclut non seulement le clinker lui-même, donc le produit avant broyage, mais aussi le clinker broyé.

Ce clinker peut être obtenu, soit à haute température (supérieure à 1800°C) par fusion, par exemple au four électrique, soit, avantageusement, par calcination (frittage) à basse température (inférieure à 1800°C).

Préférentiellement, le liant est utilisé pour la fabrication d'un béton dont il fournit les particules fines de spinelle magnésien. La formulation du béton est alors avantageusement complétée par des alumines réactives fines et par du spinelle magnésien gros, ainsi que par d'autres granulats.

La proportion élevée de spinelle magnésien dans le liant permet de fournir la totalité du spinelle fin du béton, en évitant les problèmes posés par un mélange direct de ciment alumineux et de spinelle magnésien, comme dans le document UNITECR'97 cité plus haut. De plus, le béton ainsi constitué peut avoir une basse ou une très basse teneur en chaux.

De manière préférée, les aluminates de calcium sont sous forme cristallisée.

Plus précisément, il est avantageux que les aluminates de calcium soient essentiellement constitués de CA et de CA₂, avec C = CaO et A = Al₂O₃.

Une telle composition du liant, avec un assemblage MA-CA-CA₂ (avec M = MgO), a pour conséquence surprenante et avantageuse d'éviter la présence de C₁₂A₇, cette phase pouvant conduire à un ciment raidissant.

Avantageusement, les aluminates de calcium CA et CA₂ représentent entre 19 % et 32 % en poids sec du liant. Plus spécifiquement, il est particulièrement intéressant que le liant comprenne, en poids sec du liant :
- 71 ± 2 % de MA (spinelle magnésien),
- 18 ± 2 % de CA et
- 11 ± 2 % de CA₂.

Cette composition est en équilibre thermodynamique dans le système CaO-MgO-Al₂O₃, de telle sorte que C₁₂A₇ ne peut pas être présent dans cet assemblage, excepté éventuellement dans un clinker fortement sous-cuit et de manière transitoire.

Dans une variante de réalisation, les aluminates de calcium sont sous forme amorphe, en particulier sous forme vitrifiée.

Préférentiellement, le liant est quasiment exempt de MgO libre résiduelle, au moins tel qu'on peut l'observer sur un spectre de diffraction X du liant.

En pratique, la technique de diffraction X permet de s'assurer que la magnésie libre est en proportion inférieure à 0,5 % en poids sec du liant.

Ainsi, la magnésie présente dans le cru est presque totalement combinée en spinelle. Pendant l'étape de céramisation d'un béton réfractaire à partir du liant, la déshydratation du liant hydraulique pouvant conduire à une pression de vapeur d'eau élevée à l'intérieur du béton, on évite ainsi des générations de fissures dues à l'hydratation de la magnésie en brucite.

Par rapport à UNITECR'97, le béton obtenu peut de plus disposer d'une microstructure particulièrement avantageuse, car comportant une matrice intergranulaire (entre granulats de taille importante) composée de grains beaucoup plus fins. Cette propriété est due à ce que le spinelle magnésien du liant selon l'invention est aisément broyable et permet de produire des grains très fins. Une conséquence de cette finesse est l'amélioration de la résistance à la corrosion.

De préférence, le liant a la composition chimique suivante, en poids sec du liant :
- chaux CaO : 4 à 12 %,
- magnésie MgO : 19 à 23 %,
- alumine Al₂O₃ : 69 à 74 %.

Plus spécifiquement, le liant a avantageusement la composition chimique suivante, en poids sec du liant :
- chaux CaO : 8,4 %,
- magnésie MgO : 20,4 %,
- alumine Al₂O₃ : 71,2 %.

Le liant comprend avantageusement une teneur en SiO₂ inférieure à 0,5 % en poids sec du liant. Cette teneur du cru en silice permet d'obtenir une bonne réfractarité du liant.

De préférence, le liant a une Surface Spécifique Blaine au moins égale à 3000 cm²/g, et avantageusement supérieure à 4000 cm²/g.

Cette entité est mesurée selon la norme NF EN 196-6. Le liant comporte cette caractéristique après broyage du clinker, la valeur limite indiquée donnant un niveau préféré de finesse des grains qui peut être obtenue avec le liant de l'invention.

L'invention a également pour objet l'utilisation d'un liant conforme à l'invention pour la fabrication d'un béton réfractaire.

De préférence, le liant est complété par du spinelle magnésien, préférentiellement gros, de telle sorte que le béton contient entre 20 % et 30 % de spinelle magnésien en poids sec du béton.

Cette proportion de spinelle est particulièrement avantageuse car elle permet d'obtenir de bonnes résistances à la fois à la corrosion et à la pénétration de laitiers.

Plus précisément, on réalise avantageusement le béton en mélangeant, en poids sec du béton :
- entre 16 et 27 % du liant,
- entre 2 et 13 % d'alumine fine réactive,
- entre 0 et 19 % de spinelle gros et
- entre 52 et 71 % de granulats d'alumine.

Dans un mode de réalisation particulièrement avantageux, on mélange :
- 18 % du liant,
- 11 % d'alumine fine réactive,
- 11 % de spinelle gros et
- 60 % de granulats d'alumine.

Ces proportions permettent notamment d'obtenir un béton dense, de compacité théorique comprise entre 0,25 et 0,40, dans la mesure où on utilise des courbes granulométriques pouvant satisfaire le modèle mathématique d'Andréasen. Les compositions données ci-dessus autorisent la proportion de 20 % à 30 % de spinelle magnésien

Dans des variantes de réalisation, l'alumine réactive mélangée au liant est remplacée par d'autres matériaux.

On met avantageusement en oeuvre le liant selon l'invention dans la fabrication de poches acier, préférentiellement pour des couches d'usure de telles poches acier.

L'invention concerne également un procédé de fabrication d'un liant tel que défini ci-dessus. Selon l'invention, on obtient le liant au moyen d'un frittage par cuisson d'un mélange de matières premières comprenant de la dolomie, de l'alumine et de la magnésie.

Ce mélange, source de CaO, de MgO et de Al₂O₃, a l'avantage de fournir une très bonne aptitude au frittage, appréciée par la quantité de magnésie non combinée restant après clinkérisation.

Avantageusement, les matières premières vérifient les caractéristiques suivantes, séparément ou en combinaison :
- la dolomie est naturelle : cette dolomie conduit, lors de sa décomposition pendant la clinkérisation, à la formation de produits très réactifs et elle présente également l'avantage d'être économique ;
- l'alumine est métallurgique : cette alumine a l'atout d'être très réactive ;
- la magnésie est réactive, préférentiellement caustique et avantageusement avec une granulométrie à 100 % inférieure à 100 µm, et préférentiellement inférieure à 40 µm : la granulométrie fine de la magnésie est particulièrement intéressante car elle favorise une combinaison totale de la magnésie et évite ainsi la présence de magnésie résiduelle.

Dans deux modes de réalisation particulièrement avantageux, on utilise respectivement les assemblages suivants, la dolomie, l'alumine et la magnésie étant désignées par leurs noms commerciaux :
- Dolomie Samin - Alumine Sandy - Magnésie Briquette
- Dolomie Samin - Alumine Péchiney - Magnésie MagChem40

De préférence, avant cuisson, les matières premières sont broyées jusqu'à une granulométrie correspondant à un rejet d'au plus 2 % à un tamis de 65 µm.

Ce co-broyage des matières premières permet d'accélérer les réactions chimiques en phase solide.

On effectue avantageusement la cuisson à une température comprise entre 1400°C et 1600°C.

Ces températures de cuisson relativement basses sont avantageuses sur le plan industriel et économique.

De manière avantageuse, on évalue le degré d'avancement de la cuisson en mesurant le taux de magnésie libre en poids sec du mélange, par exemple par diffraction X.

Ce taux est en effet représentatif de la clinkérisation en cours.

Une fois le liant du type clinker obtenu, on procède préférentiellement à un broyage de ce clinker. On le met ensuite avantageusement en oeuvre dans la fabrication de béton à base de spinelle magnésien.

La présente invention sera illustrée et mieux comprise à l'aide de modes de réalisation et de mise en oeuvre particuliers, aucunement limitatifs, en référence aux figures annexées sur lesquelles:
- la figure 1 représente, en section longitudinale, une poche acier fabriquée notamment au moyen du liant selon l'invention;
- la figure 2 montre un agrandissement d'une partie des bords de la poche acier de la figure 1;
- la figure 3 représente les courbes granulométriques comparatives du spinelle d'un liant selon l'invention et de deux spinelles courants;
- la figure 4 est une photo montrant avec un agrandissement 200, la microstructure après céramisation d'un béton réfractaire connu à base d'un mélange direct de ciment alumineux (commercialisé sous la référence "S71") et de spinelle magnésien (comme exposé dans la publication UNITECR'97 citée plus haut);
- la figure 5 est une photo montrant avec un agrandissement 200, la microstructure après céramisation d'un béton réfractaire CMA obtenu à partir d'un liant selon l'invention;
- la figure 6 montre en vue de dessus un creuset utilisé pour des tests de corrosion;
- la figure 7 montre en vue latérale en coupe le creuset de la figure 6;
- la figure 8 représente un profil type de dégradation par du laitier, du creuset des figures 6 et 7;
- la figure 9 est une photographie d'un premier creuset après un essai de corrosion, à 1500°C et 24 h; et
- la figure 10 est une photographie d'un second creuset après un essai de corrosion, à 1500°C et 24 h.

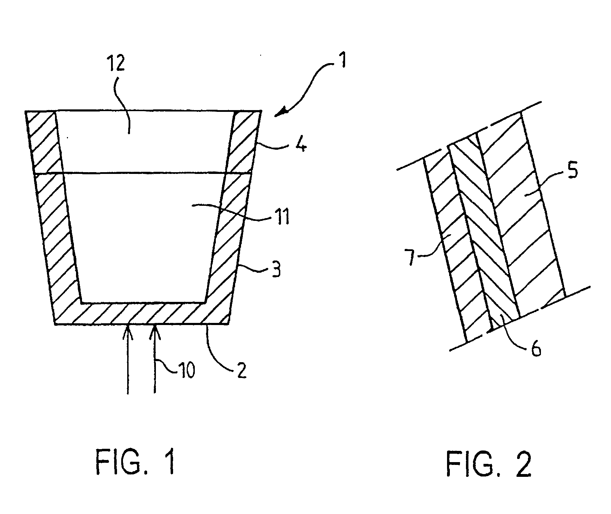

Un liant du type clinker, comprenant du spinelle magnésien représentant entre 68 % et 81 % en poids sec du liant et des aluminates de calcium, est utilisé pour la fabrication d'un béton réfractaire employé dans la réalisation d'une poche acier. Une telle poche acier 1 (figure 1), de forme sensiblement tronconique, comporte un fond 2, une paroi latérale 3 et un cordon 4 surmontant la paroi latérale 3. La poche acier 1 sert au transport du métal en fusion, mais peut aussi être pourvue de moyens de chauffage produisant un chauffage 10 dans le fond 2. Ce chauffage est par exemple effectué par induction. Dans une variante de réalisation, il est effectué par des électrodes plongeantes.

Les bords 2, 3 et 4 de la poche acier 1 comprennent trois couches successives 5, 6 et 7, de l'intérieur vers l'extérieur de la poche (figure 2), qui sont respectivement une couche d'usure 5, une couche d'isolation 6 et une couche de sécurité 7.

Chacune des trois zones constituées par le fond 2, la paroi latérale 3 et le cordon 4 est formée à partir d'un béton réfractaire distinct, adapté à la zone considérée. La couche d'usure 5 de la paroi latérale 3 et du fond 2 est constituée du béton réalisé à partir du liant défini ci-dessus.

En fonctionnement, on utilise la poche acier 1 en portant à des températures très élevées (pouvant atteindre 1700°C), de l'acier 11 en fusion. L'acier 11 dans la poche acier 1 est contenu dans un espace délimité par le fond 2 et la paroi latérale 3. Il se forme alors au-dessus de l'acier 11, un laitier 12 qui est quant à lui bordé latéralement par le cordon 4.

On détaille ci-dessous des exemples particuliers de réalisation du liant du type clinker.

### EXEMPLE 1

On part de (en poids sec du liant) :
- 23,4 % en poids de dolomie Samin,
- 13,18 % de magnésie Nedmag,
- 63,42 % d'alumine Pechiney,
que l'on cuit 5 heures à 1450°C. On détermine la composition du produit final par fluorescence X (tableau 1).

**TABLEAU I**

| Composition du clinker obtenu | | | | | |
|---|---|---|---|---|---|
| Composition | SiO₂ | Al₂O₃ | Fe₂O₃ | CaO | MgO |
| Pourcentage | 0,1 | 71,4 | 0,2 | 8,6 | 19,6 |

L'étude par diffraction X du clinker formé indique que seules les phases désirées sont présentes, à savoir CA, CA₂ et MA (avec C = CaO, A = Al₂O₃ et M = MgO).

L'importance du choix des matières premières est mise en évidence par les essais comparatifs suivants.

On réalise un second clinker selon le même mode opératoire que le précédent, mais avec des matières premières différentes : on change l'alumine par de la gibbsite (alumine hydratée) en utilisant les proportions suivantes :
- 17,2 % en poids de dolomie Samin,
- 10,1 % de magnésie Nedmag
- 72,7 % de gibbsite,
et on cuit le mélange 5 heures entre 1400 et 1600°C.

On mesure, pour les deux clinkers, le taux de combinaison des phases par le rapport des surfaces des pics de diffraction X de MgO et de spinelle MA.

Les résultats sont exposés dans le tableau II.

**TABLEAU II**

| Comparaison des rapports MgO/MA (rapport des surfaces de pics en diffraction X) | |
|---|---|
| Matières premières | MgO/MA |
| Dolomie/Alumine/Magnésie | 0,06 |
| Dolomie/Gibbsite/Magnésie | 0,35 |

On constate ainsi que le taux de combinaison de la magnésie avec l'alumine pour former le spinelle dépend des matières premières utilisées. Le choix de celles-ci est donc bien fondamental.

Le spinelle obtenu dans le liant de l'exemple 1 avec le mélange dolomie/alumine/magnésie bénéficie d'une grande finesse de grains au regard des spinelles disponibles sur le marché. Ceci est illustré par une comparaison des diamètres de particules entre le spinelle du liant ci-dessus et le spinelle commercialisé sous le nom ALCOA AR78 DIN70.

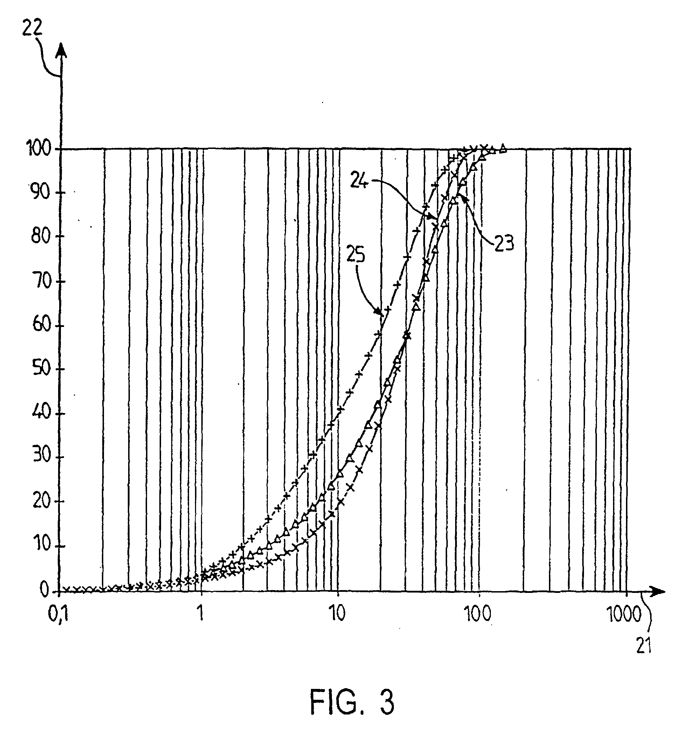

Cette comparaison est effectuée au moyen d'un appareil de mesure commercialisé sous le nom Malvern Mastersizer (modèle S), faisant appel à la théorie de MIE avec la présentation " 3QHD " dont les spécificités sont : indice de réfraction des particules égal à 1,729, indice d'absorption des particules égal à 0,1 et indice de réfraction du liquide porteur égal à 1,33. On trace ainsi (figure 3) trois courbes 23 à 25 donnant respectivement pour des spinelles connus (courbes 23 et 24) et le spinelle du liant ci-dessus (courbe 25), en fonction du diamètre des particules exprimé en µm (axe 21), le pourcentage cumulé du volume total (axe 22). On constate ainsi que le spinelle du liant ci-dessus comprend des particules sensiblement plus petites que celles des spinelles connus.

### EXEMPLE 2

On réalise un clinker CMA selon l'invention à partir de 23 % de dolomie, 13,5 % de magnésie et 63,5 % d'alumine que l'on cuit 5 heures à 1450°C et on obtient un clinker CMA de composition :
- CaO : 8,4 %
- MgO : 20,4 %
- Al₂O₃ : 71,2 %

Le diagramme de la diffraction par rayons X du clinker cuit montre que seules les trois phases attendues CA, CA₂ et MA sont présentes.

On réalise un béton réfractaire à partir de ce clinker en mélangeant les matières premières suivantes (tableau III).

**TABLEAU III**

| Matières premières pour la fabrication du béton | |
|---|---|
| Matières premières | % massique |
| Granulats grossiers d'alumine tabulaire ALCOA T60(0-7 mm) | 61 |
| Granulats de spinelle Haicheng Houyin Magnesite Products MAS 76 (< 1 mm) | 11 |
| Fines d'alumine réactive ALCOA CT 3000 SG | 10 |
| Clinker CMA ci-dessus | 18 |
| Dispersants (mélange de Polyacrylates - Darvan 7S - et d'acide citrique) | 0,1 |

On mélange ces ingrédients avec 4,7 % d'eau par rapport à la formulation de béton.

On mesure les propriétés qui suivent de ce béton réfractaire :
- on observe un fort dégazage du béton, ce qui indique que le béton se met en place correctement sans emprisonner de bulles d'air, diminuant ainsi la porosité du réfractaire et donc améliorant sa résistance à la corrosion par le laitier ;
- le raidissement du béton a lieu au bout de 40 mn.

On constate, par des tests mécaniques classiques normalisés et des tests de corrosion, que le béton répond à des exigences de bonne tenue pour des applications comme couche d'usure dans des poches acier.

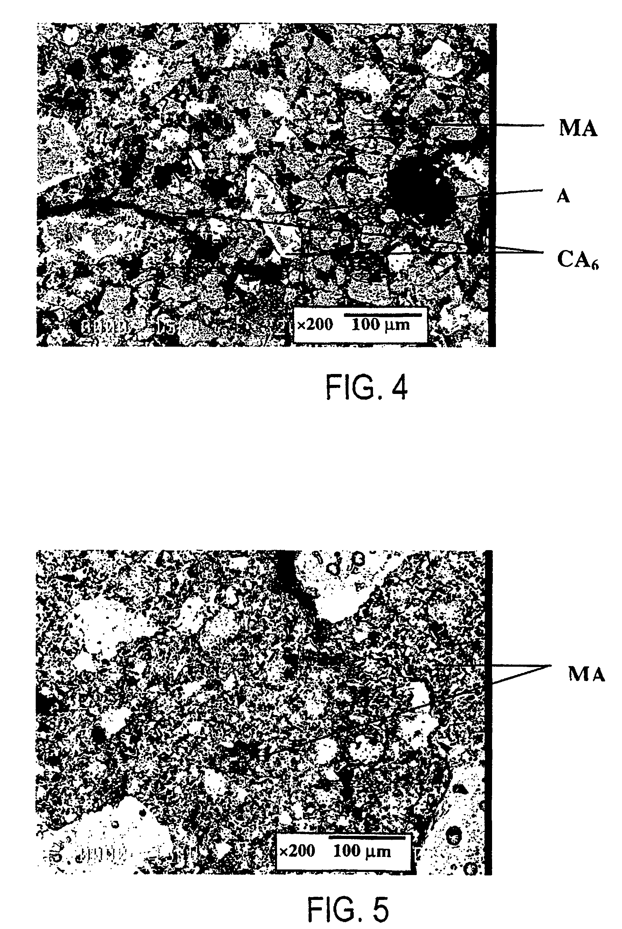

On peut également observer que le béton obtenu a une microstructure présentant une matrice intergranulaire composée de grains très fins, notamment en comparaison d'un béton réfractaire obtenu par mélange direct de ciment alumineux et de spinelle magnésien (figures 4 et 5).

Dans les exemples suivants, on désigne par:
- " liant CMA 72 ", un ciment contenant 72% de MA, 17% de CA et 11% de CA₂ en poids sec du liant (composition nominale), produit selon un processus industriel, et
- " liant CMA 80 ", un ciment contenant 80% de MA, 15% de CA et 5% de CA₂ en poids sec du liant, obtenu de manière expérimentale.

On se réfère également au ciment alumineux connu sous la dénomination commerciale Secar 71, pour des comparaisons.

Les notations suivantes sont employées ci-après:
- Alu Tab : alumine tabulaire,
- Mesh: nombre d'ouvertures par pouce sur un tamis,
- Alu Réact CT 3000 SG: alumine réactive, commercialisée sous le nom de CT 3000 SG par la société ALCOA,
- Alu Réact. P 152 SB: alumine réactive commercialisée sous le nom P 152 SB par la société PECHINEY,
- HMP: fluidifiant constitué d'hexamétaphosphate de sodium,
- Spinelle chinois: spinelle commercialisé par la société Haicheng Houyin,
- S 71: ciment alumineux commercialisé sous le nom Secar 71,
- DARVAN 7 S: fluidifiant.

### EXEMPLE 3

On s'intéresse à des bétons à base de liants CMA 72 et CMA 80 dont les compositions sont données dans le tableau IV, et à un béton à base de liant S71 dont la composition est indiquée dans le tableau V.

**TABLEAU IV**

| Composition d'un béton à base de CMA | | |
|---|---|---|
| Référence | Composition du béton | |
| | Teneur en % | Quantité en gr |
| Alu Tab ¼ - 8 Mesh | 33,0 | 660 |
| Alu Tab 8 - 14 Mesh | 16,0 | 320 |
| Alu Tab 28 - 48 Mesh | 6,0 | 120 |
| Alu Tab < 48 Mesh | 5,0 | 100 |
| Spinelle 0,5 - 1 mm | 7,5 | 150 |
| Spinelle 0 - 0,5 mm | 3,5 | 70 |
| Alu Réact CT 3000 SG | 11,0 | 220 |
| Liant CMA 72 ou 80 | 18,0 | 360 |
| TOTAL | 100,0 | 2000 |
| EAU | 5,3 | 106 |
| Hexamétaphosphate de sodium HMP | 0,080 | 1,60 |
| Acide borique | 0,010 | 0,20 |

**TABLEAU V**

| Composition d'un béton à base de S71 | | |
|---|---|---|
| Référence | Composition du béton | |
| | Teneur en % | Quantité en gr |
| Alu Tab ¼ - 8 Mesh | 33,0 | 660 |
| Alu Tab 8 - 14 Mesh | 16,0 | 320 |
| Alu Tab 28 - 48 Mesh | 6,0 | 120 |
| Alu Tab < 48 Mesh | 5,0 | 100 |
| Spinelle 0,5 - 1 mm | 9,0 | 180 |
| Spinelle 0 - 0,5 mm | 4,0 | 80 |
| Spinelle 0 - 0,09 mm | 10,0 | 200 |
| Alu Réact CT 3000 SG | 11,0 | 220 |
| Liant S71 | 6,0 | 120 |
| TOTAL | 100,0 | 2000 |
| EAU | 5,3 | 106 |
| Hexamétaphosphate de sodium HMP | 0,080 | 1,60 |
| Acide borique | 0,010 | 0,20 |

On obtient des propriétés de rhéologie et d'ouvrabilité exposées dans le tableau VI.

**TABLEAU VI**

| Rhéologie et ouvrabilité des bétons | | | | | | |
|---|---|---|---|---|---|---|
| Test Référence | Eau (%) | Test d'écoulement | | | | Temps de mise en place (working time) |
| | | Table vibrante (mm) | | Table ASTM (%) | | |
| | | 0 mn | 30 mn | 0 mn | 15 mn | mn |
| S71 | 5,30 | 240 | 130 | 80 | 30 | 45 |
| CMA 72 | 5,30 | 230 | 180 | 65 | 40 | 45 |
| CMA 80 | 5,30 | 225 | 210 | 90 | 60 | 35 |

La table ASTM désigne une table à chocs pour essais normalisés selon la norme ASTM C230.

On constate que les fluidités des bétons, représentées par les mesures d'étalement à différentes échéances, sont similaires ou supérieures dans le cas du CMA 80. De plus, les ouvrabilités représentées par le temps de mise en place (working time) sont identiques, aux incertitudes de mesure près.

A teneur en eau constante, l'adjuvantation du CMA 72 convient au CMA 80. On observe que l'enrichissement en spinelle du CMA 80 s'accompagne d'un gain très significatif en fluidité. A fluidité constante, la teneur en eau peut être diminuée. Cependant, le béton subit alors une baisse de performances mécaniques (voir exemple 5).

Ces résultats montrent que les bétons à base de CMA 72 ou CMA 80 permettent une mise en place environ équivalente à celle procurée par la solution avec Secar 71.

### EXEMPLE 4

Sur le béton de l'exemple 3 avec le CMA 72, on pratique des tests de rhéologie et d'ouvrabilité. Les essais qui suivent mettent en jeu deux adjuvantations, notées respectivement adj1 et adj2. et exposées dans le tableau VII. Les résultats obtenus pour la rhéologie et l'ouvrabilité sont donnés dans le tableau VIII.

**TABLEAU VII**

| Adjuvantations pour le béton de l'exemple 3 (avec CMA 72) | | | | |
|---|---|---|---|---|
| Référence | Composition de l'adjuvantation | | | |
| | adj1 | | adj2 | |
| | Teneur En % | Quantité en gr | Teneur en % | Quantité en gr |
| Eau | 5,3 | 106 | 5,3 | 106 |
| Sodium hexamétaphosphate HMP | 0,080 | 1,600 | 0,080 | 1,600 |
| Acide borique | 0,010 | 0,200 | 0,015 | 0,300 |

**TABLEAU VIII**

| Rhéologie et ouvrabilité (adj1 et adj2) | | | | | | |
|---|---|---|---|---|---|---|
| Test Référence | Eau (%) | Test d'écoulement | | | | Temps de mise en place (mn) |
| | | Table vibrante (mm) | | Table ASTM (%) | | |
| | | 0 mn | 30 mn | 0 mn | 15 mn | |
| adj1 | 5,30 | 230 | 180 | 65 | 40 | 45 |
| adj2 | 5,30 | 220 | 185 | 70 | 30 | 50 |

On constate ainsi que la teneur en HMP assure la défloculation et la fluidité du béton. De plus, l'ajout d'acide borique n'allonge pas significativement l'ouvrabilité. L'adjuvantation adj1 donne ainsi un bon compromis.

### EXEMPLE 5

Dans cet exemple, on donne les résultats sur les propriétés thermomécaniques des bétons de l'exemple 3 par des tests comparatifs avec le béton ayant une composition de référence (liant S71, qui ne contient pas de spinelle magnésien).

Les performances mécaniques des bétons à froid et après cuisson sont données dans les tableaux IX et X, dans lesquels F et C désignent respectivement les résistances en flexion et en compression.

**TABLEAU IX**

| Résistances mécaniques à froid et après étuvage | | | | | | | |
|---|---|---|---|---|---|---|---|
| Test Référence | Eau (%) | Résistances mécaniques (MPa) | | | | | |
| | | à froid | | | | après étuvage à 110°C | |
| | | F6h | C6h | F24h | C24h | F | C |
| S 71 | 5,30 | - | - | 5,3 | 57,7 | 12,8 | 100,7 |
| CMA 72 | 5,30 | 1,3 | 13,8 | 6,6 | 64,6 | 10,9 | 98,9 |
| CMA 80 | 5,30 | 0,6 | 9,6 | 4,6 | 36,9 | 10,2 | 83,1 |

**TABLEAU X**

| Résistances mécaniques après traitement thermique et rupture à froid | | | | | | | |
|---|---|---|---|---|---|---|---|
| Test Référence | Eau (%) | Résistances mécaniques après traitement thermique et rupture à froid (MPa) | | | | | |
| | | F800°C | C800°C | F1100°C | C1100°C | F1500°C | C1500°C |
| S 71 | 5,30 | 9,8 | 87,3 | 13,1 | 77,6 | 47,3 | > 168 |
| CMA 72 | 5,30 | 10,2 | 110,8 | 17,4 | 112,2 | 37,9 | > 168 |
| CMA 80 | 5,30 | 9,9 | 105,0 | 16,4 | 111,2 | 32,4 | > 168 |

On constate qu'après traitement thermique à 800°C, les résistances mécaniques développées par les CMA sont supérieures à celles données par le S71. De plus, la céramisation du béton intervient à plus faible température de cuisson avec les liants CMA qu'avec le ciment S71.

### EXEMPLE 6

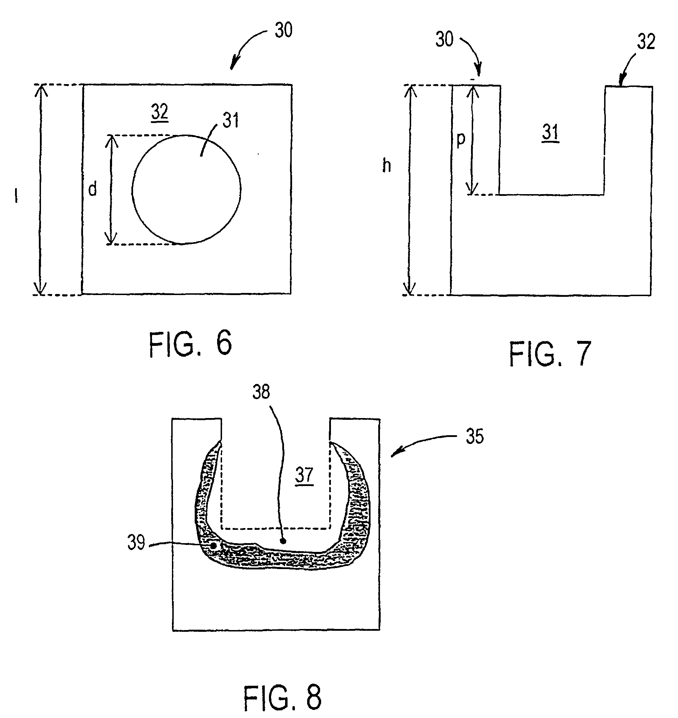

Dans cet exemple, on s'intéresse à la corrosion de bétons par des laitiers. Pour ce faire, on élabore des creusets 30 (figures 6 et 7) dans des moules, de telle sorte que chaque creuset 30 a une forme cubique de largeur I, dont une face supérieure 32 est évidée d'une cavité 31 constituant un cylindre de diamètre d et de profondeur p. Les dimensions I, d et p valent par exemple respectivement 100, 50 et 50 mm.

La quantité de béton nécessaire pour la confection d'un bloc est de 2,5 kg. Pour chaque test deux moules sont coulés simultanément. On introduit 5 kg de béton dans le bol d'un malaxeur du type Rayneri, puis l'eau de gâchage. Le malaxage est effectué à petite vitesse. Le mélange est alors versé dans les moules de façonnage, puis le noyau d'évidement est mis en place. Une vibration du mélange d'une minute est effectuée afin de supprimer les bulles d'air. Pour la prise, les échantillons sont placés dans une armoire humide pendant 24h à 20°C. Les cubes sont alors démoulés, séchés en étuve à 110°C durant 24h, puis cuits en four à moufle à 1500°C durant 6 heures afin de les céramiser. L'état de surface des parois des cubes n'étant pas parfaitement lisse, un surfaçage du fond de l'évidement est réalisé à l'aide d'une carotteuse à fond plat. Cette surface sert de référence pour mesurer l'effet de corrosion.

L'essai de corrosion consiste à placer les creusets 30 contenant du laitier dans un four à température contrôlée pendant 24 heures. Pendant cette période le laitier corrode le béton des creusets 30.

Avant le traitement, on mesure précisément la profondeur p de l'évidement de la cavité 31 sur chaque bloc de creuset 30, à l'aide d'un réglet métallique. La cavité 31 est alors remplie de laitier. Le bloc est introduit dans un four à moufle, dans une gazette en alumine remplie elle-même d'alumine en poudre pour éviter la détérioration du four au cas où il y aurait fissuration du creuset 30. Comme précisé précédemment, un traitement thermique est réalisé, à 1500 ou 1600°C, avec les profils suivants:
- profil 1: montée en température de 100°C/h jusqu'à 1500°C, pallier de 24h00 à 1500°C puis descente libre jusqu'à 20°C,
- profil 2: montée en température de 100°C/h jusqu'à 1600°C, pallier de 24h00 à 1600°C puis descente libre jusqu'à 20°C.

Après traitement thermique, les creusets 35 obtenus ont une cavité 37 (figure 8). Ils sont tronçonnés en deux parties passant par le centre de la cavité 37. On distingue typiquement deux zones 38 et 39 distinctes dans la partie endommagée par l'essai:
- la corrosion, c'est-à-dire la partie du bloc détruite par le laitier (zone 38) et
- l'imprégnation, c'est-à-dire la profondeur de pénétration du laitier dans le béton (zone 39).

La corrosion est calculée par différence de profondeur de la cavité avant et après traitement thermique (cavités 31 et 37). L'imprégnation est estimée en mesurant la pénétration du laitier en plusieurs points du creuset 30.

On soumet à ce test des bétons ayant les compositions indiquées dans le tableau XI. Les échantillons sont désignés par des noms en trois parties: la première désigne le liant (S71, CMA 72 ou CMA 80), la deuxième, l'alumine (A pour ALCOA: CT 3000 SG, et P pour PECHINEY: P 152 SB), et la troisième, le spinelle (R pour référence, H pour HARBISON et Ch pour chinois).

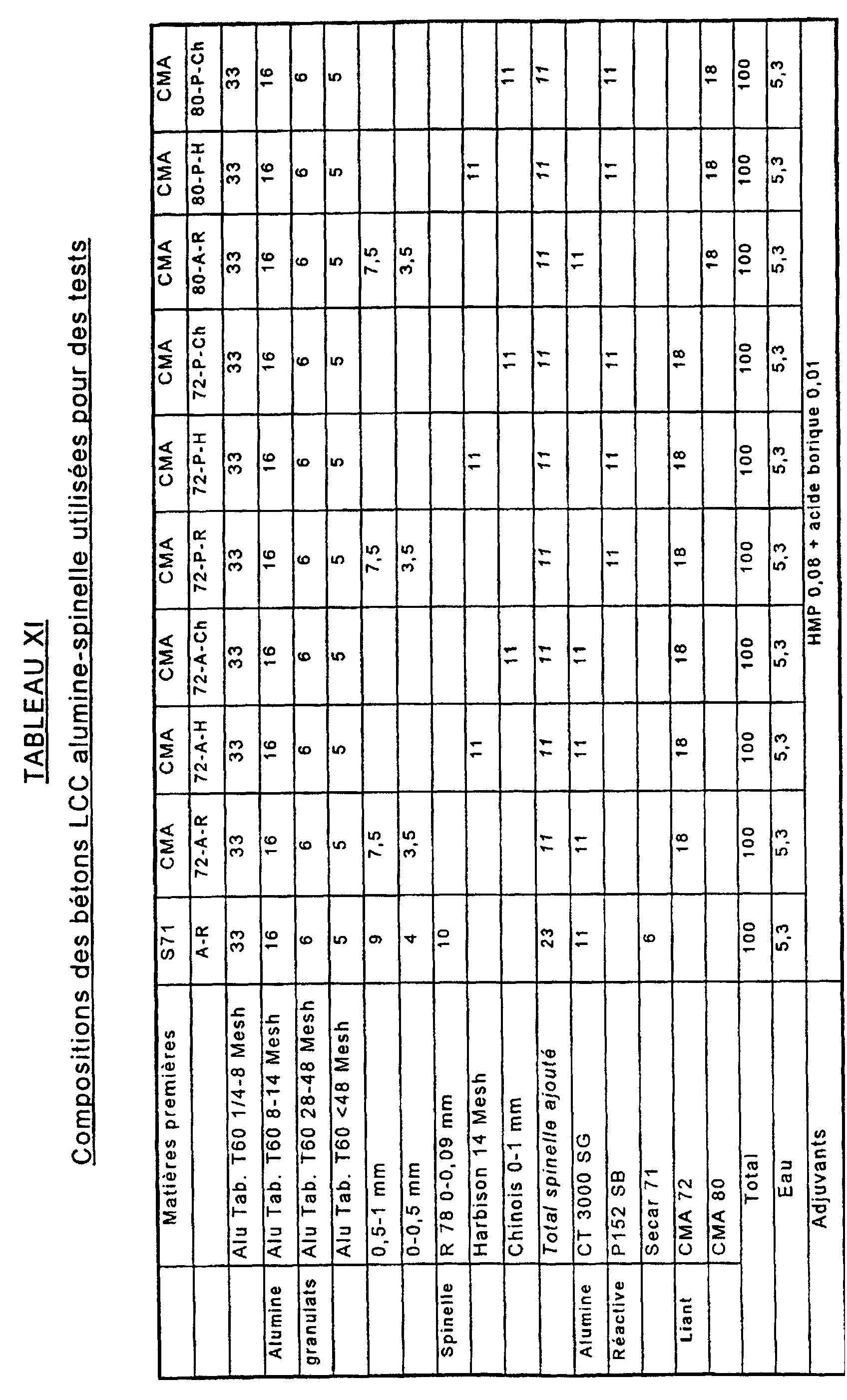

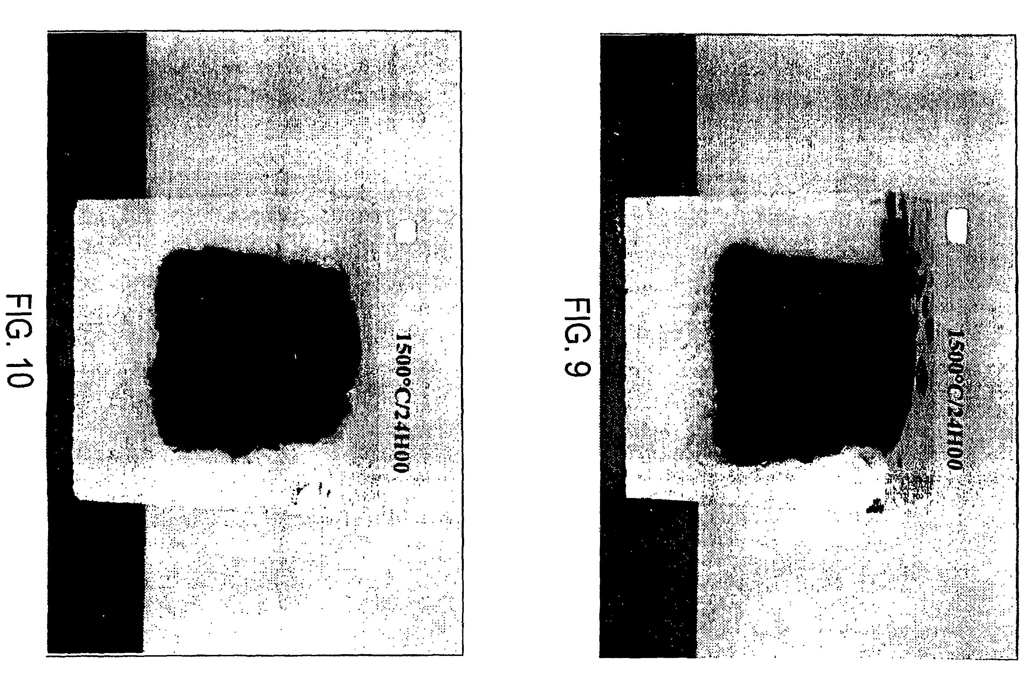

Les épaisseurs de corrosion et d'imprégnation des creusets sont reportées dans le tableau XII. De plus, on peut voir sur des photographies, les creusets après essais de corrosion pour S71-A-R (figure 9) et CMA 72-A-R (figure 10), à 1500°C et 24 h.

En plus de ces observations, il faut noter que pour les essais à 1600°C, qui créent des conditions particulièrement sévères, certains creusets ont visiblement perdu leur contenu rapidement (identifiés par une étoile dans le tableau XII). Les épaisseurs endommagées sont donc plus faibles. Cependant, à cette température, tous les creusets ont finalement fissuré et perdu une partie de leur contenu, excepté le creuset CMA 80-A-R. Les fissures sont apparues aux endroits où l'épaisseur de la paroi est la plus faible. A 1500°C/24h, la dégradation des creusets est beaucoup moins importante. Les creusets ne fissurent pas et conservent leur contenu.

**TABLEAU XII**

| Tests de corrosion (24 h) à 1500 ou 1600°C | | | | | |
|---|---|---|---|---|---|
| | 1500°C | | 1600°C | | |
| | Corrosion | Imprégnation | Corrosion | Imprégnation | Observations |
| S71-A-R | 3mm | 2mm | 5mm | 5mm | fissuré* |
| CMA 72-A-R | 3mm | 0mm | 8mm | 10mm | très fissuré |
| | 4mm | 1mm | - | - | |
| CMA 72-A-H | 6mm | 1mm | | | |
| CMA-72-A-Ch | 5mm | 1 mm | | | |
| CMA 72-P-R | 5mm | 1mm | 5mm | 15mm | très fissuré |
| CMA 72-P-Ch | 5mm | 0mm | 8mm | 5mm | très fissuré |
| CMA 72-P-H | | | 4mm | 8mm | très fissuré |
| CMA 80-A-R | | | 6mm | 2mm | non fissuré |
| CMA 80-P-Ch | | | 4mm | 5mm | fissuré* |
| CMA 80-P-H | | | 7mm | 6mm | fissuré* |

| | | | | | |
|---|---|---|---|---|---|
| * Fissuration rapide → Ecoulement du laitier hors du creuset et peu d'interaction. | | | | | |

A 1500°C, les formulations présentent toutes une faible dégradation, bien que les épaisseurs soient légèrement plus faibles pour la formule CMA 72-A-R contenant le CMA. Le remplacement du spinelle de référence et/ou de l'alumine réactive CT 3000 SG par d'autres produits n'altère pas les propriétés de résistance à la corrosion. A 1600°C, ces observations restent vraies, dans la mesure de ce qui est observable.

Ces résultats montrent la flexibilité de formulation du CMA par rapport aux matières premières. Ces modifications n'engendrent pas de dégradations importantes des propriétés des bétons. De plus un CMA contenant 80% de spinelle présente également des caractéristiques de résistance à la corrosion avantageuses.

## Revendications

1. Liant hydraulique du type clinker obtenu par cuisson comprenant :
• une phase minéralogique de spinelle magnésien, et
• au moins une phase minéralogique d'aluminate de calcium, avec une teneur en chaux inférieure à 15 % en poids sec du liant,
**caractérisé en ce que** le spinelle magnésien représente entre 68 % et 81 % en poids sec du liant.

2. Liant selon la revendication 1, **caractérisé en ce que** les aluminates de calcium sont essentiellement constitués de CA et de CA₂, avec C = CaO et A = Al₂O₃.

3. Liant selon la revendication 2, **caractérisé en ce que** les aluminates de calcium CA et CA₂ représentent entre 19 % et 32 % en poids sec du liant.

4. Liant selon la revendication 3, **caractérisé en ce qu'**il comprend, en poids sec du liant, 71 ± 2 % de spinelle magnésien, 18 ± 2 % de CA et 11 ± 2 % de CA₂.

5. Liant selon l'une quelconque des revendications 1 à 4, **caractérisé en ce qu'**il est quasiment exempt de MgO libre résiduelle, au moins tel qu'on peut l'observer sur un spectre de diffraction X du liant.

6. Liant selon l'une quelconque des revendications 1 à 5 **caractérisé en ce qu'**il a la composition chimique suivante, en poids sec du liant :
- chaux CaO : 4 à 12 %,
- magnésie MgO : 19 à 23 %,
- alumine Al₂O₃ : 69 à 74 %.

7. Liant selon la revendication 6, **caractérisé en ce qu'**il a la composition chimique suivante, en poids sec du liant
- chaux CaO : 8,4 %,
- magnésie MgO : 20,4 %,
- alumine Al₂O₃ : 71,2 %.

8. Liant selon l'une quelconque des revendications 1 à 7, **caractérisé en ce qu'**il comprend une teneur en SiO₂ inférieure à 0,5 % en poids sec du liant.

9. Liant selon l'une quelconque des revendications 1 à 8, **caractérisé en ce qu'**il a une Surface Spécifique Blaine au moins égale à 3000 cm²/g.

10. Utilisation d'un liant conforme à l'une quelconque des revendications 1 à 9, pour la fabrication d'un béton réfractaire.

11. Utilisation d'un liant selon la revendication 10, **caractérisée en ce que** le liant est complété par du spinelle magnésien, préférentiellement gros, de telle sorte que le béton contient entre 20 % et 30 % de spinelle magnésien en poids sec du béton.

12. Utilisation d'un liant selon la revendication 11, **caractérisée en ce qu'**on réalise le béton en mélangeant, en poids sec du béton :
- entre 16 et 27 % du liant,
- entre 2 et 13 % d'alumine fine réactive,
- entre 0 et 19 % de spinelle gros et
- entre 52 et 71 % de granulats d'alumine,
et préférentiellement :
- 18 % du liant,
- 11 % d'alumine fine réactive,
- 11 % de spinelle gros et
- 60 % de granulats d'alumine.

13. Utilisation d'un liant selon l'une quelconque des revendications 10 à 12, **caractérisée en ce qu'**on le met en oeuvre dans la fabrication de poches acier (1), préférentiellement pour des couches d'usure (5) de telles poches acier (1).

14. Procédé de fabrication d'un liant conforme à l'une quelconque des revendications 1 à 9, **caractérisé en ce qu'**on obtient le liant au moyen d'un frittage par cuisson d'un mélange de matières premières comprenant de la dolomie, de l'alumine et de la magnésie.

15. Procédé selon la revendication 14, **caractérisé en ce que** la dolomie est naturelle.

16. Procédé selon l'une des revendications 14 ou 15, **caractérisé en ce que** l'alumine est métallurgique.

17. Procédé selon l'une quelconque des revendications 14 à 16, **caractérisé en ce que** la magnésie est réactive, préférentiellement caustique et avantageusement avec une granulométrie à 100 % inférieure à 100 µm, et préférentiellement inférieure à 40 µm.

18. Procédé selon l'une quelconque des revendications 14 à 17, **caractérisé en ce qu'**avant cuisson, les matières premières sont broyées jusqu'à une granulométrie correspondant à un rejet d'au plus 2 % à un tamis de 65 µm.

19. Procédé selon l'une quelconque des revendications 14 à 18, **caractérisé en ce qu'**on effectue la cuisson à une température comprise entre 1400°C et 1600°C.

20. Procédé selon l'une quelconque des revendications 14 à 19, **caractérisé en ce qu'**on évalue le degré d'avancement de la cuisson en mesurant le taux de magnésie libre en poids sec du mélange.

## Patentansprüche

1. Hydraulisches Bindemittel des Klinkertyps, das durch Brennen erhalten wird, umfassend:
- eine mineralogische Magnesiospinellphase; und
- wenigstens eine mineralogische Calciumaluminatphase;
mit einem Kalkgehalt von weniger als 15% des Trockengewichts des Bindemittels;
**dadurch gekennzeichnet, dass** der Magnesiospinell zwischen 68% und 81% des Trockengewichts des Bindemittels ausmacht.

2. Bindemittel gemäß Anspruch 1, **dadurch gekennzeichnet, dass** die Calciumaluminate im Wesentlichen aus CA und CA₂ bestehen, wobei C = CaO und A = Al₂O₃.

3. Bindemittel gemäß Anspruch 2, **dadurch gekennzeichnet, dass** die Calciumaluminate CA und CA₂ zwischen 19% und 32% des Trockengewichts des Bindemittels ausmachen.

4. Bindemittel gemäß Anspruch 3, **dadurch gekennzeichnet, dass** es, bezogen auf das Trockengewicht des Bindemittels, 71 ± 2% Magnesiospinell, 18 ± 2% CA und 11 ± 2% CA₂ umfasst.

5. Bindemittel gemäß einem der Ansprüche 1 bis 4, **dadurch gekennzeichnet, dass** es fast frei von restlichem freiem MgO ist, wenigstens soweit man auf einem Röntgenbeugungsspektrum des Bindemittels beobachten kann.

6. Bindemittel gemäß einem der Ansprüche 1 bis 5, **dadurch gekennzeichnet, dass** es die folgende chemische Zusammensetzung hat, bezogen auf das Trockengewicht des Bindemittels:
- Kalk CaO: 4 bis 12%;
- Magnesiumoxid MgO: 19 bis 23%;
- Aluminiumoxid Al₂O₃: 69 bis 74%.

7. Bindemittel gemäß Anspruch 6, **dadurch gekennzeichnet, dass** es die folgende chemische Zusammensetzung hat, bezogen auf das Trockengewicht des Bindemittels:
- Kalk CaO: 8,4%;
- Magnesiumoxid MgO: 20,4%;
- Aluminiumoxid Al₂O₃: 71,2%.

8. Bindemittel gemäß einem der Ansprüche 1 bis 7, **dadurch gekennzeichnet, dass** es einen SiO₂-Gehalt von weniger als 0,5% des Trockengewichts des Bindemittels hat.

9. Bindemittel gemäß einem der Ansprüche 1 bis 8, **dadurch gekennzeichnet, dass** es eine spezifische Oberfläche nach Blaine von wenigstens 3000 cm²/g hat.

10. Verwendung eines Bindemittels gemäß einem der Ansprüche 1 bis 9 zur Herstellung eines feuerfesten Betons.

11. Verwendung eines Bindemittels gemäß Anspruch 10, **dadurch gekennzeichnet, dass** das Bindemittel mit Magnesiospinell, vorzugsweise grobem Magnesiospinell, ergänzt wird, so dass der Beton zwischen 20% und 30% Magnesiospinell enthält, bezogen auf das Trockengewicht des Betons.

12. Verwendung eines Bindemittels gemäß Anspruch 11, **dadurch gekennzeichnet, dass** man den Beton erhält, indem man folgendes miteinander mischt, bezogen auf das Trockengewicht des Betons:
- zwischen 16 und 27% des Bindemittels;
- zwischen 2 und 13% feines reaktives Aluminiumoxid;
- zwischen 0 und 19% grober Spinell; und
- zwischen 52 und 71% Aluminiumoxidgranulat;
und vorzugsweise:
- 18% des Bindemittels;
- 11% feines reaktives Aluminiumoxid;
- 11% grober Spinell; und
- 60% Aluminiumoxidgranulat.

13. Verwendung eines Bindemittels gemäß einem der Ansprüche 10 bis 12, **dadurch gekennzeichnet, dass** man es bei der Herstellung von Stahlpfannen (1), vorzugsweise für das Verschleißfutter (5) solcher Stahlpfannen (1), verwendet.

14. Verfahren zur Herstellung eines Bindemittels gemäß einem der Ansprüche 1 bis 9, **dadurch gekennzeichnet, dass** man das Bindemittel mit Hilfe einer Sinterung durch Brennen eines Gemischs von Rohstoffen erhält, das Dolomit, Aluminiumoxid und Magnesiumoxid umfasst.

15. Verfahren gemäß Anspruch 14, **dadurch gekennzeichnet, dass** es sich bei dem Dolomit um natürlichen Dolomit handelt.

16. Verfahren gemäß einem der Ansprüche 14 oder 15, **dadurch gekennzeichnet, dass** es sich bei dem Aluminiumoxid um metallurgisches Aluminiumoxid handelt.

17. Verfahren gemäß einem der Ansprüche 14 bis 16, **dadurch gekennzeichnet, dass** das Magnesiumoxid reaktiv, vorzugsweise kaustisch, ist und vorteilhafterweise eine Korngröße von 100% unter 100 µm und vorzugsweise unter 40 µm hat.

18. Verfahren gemäß einem der Ansprüche 14 bis 17, **dadurch gekennzeichnet, dass** die Rohstoffe vor dem Brennen bis zu einer Korngröße gemahlen werden, die einem Rückstand von höchstens 2% auf einem Sieb von 65 µm entspricht.

19. Verfahren gemäß einem der Ansprüche 14 bis 18, **dadurch gekennzeichnet, dass** das Brennen bei einer Temperatur zwischen 1400 °C und 1600 °C erfolgt.

20. Verfahren gemäß einem der Ansprüche 14 bis 19, **dadurch gekennzeichnet, dass** man den Fortschritt des Brennens bewertet, indem man den Anteil von freiem Magnesiumoxid am Trockengewicht des Gemischs misst.

## Claims

1. Clinker-type hydraulic binder obtained through burning comprising :
- a magnesian spinel mineralogical phase, and
- at least a calcium aluminate mineralogical phase with a lime content of less than 15% of the binder by dry weight,
**characterized in that** the magnesian spinel comprises between 68% and 81% of the binder by dry weight.

2. Binder according to claim 1, **characterized in that** the calcium aluminates are essentially made of CA and CA₂, with C=CaO and A=Al₂O₃.

3. Binder according to claim 2, **characterized in that** the calcium aluminates CA and CA₂ comprise between 19% and 32% of the binder by dry weight.

4. Binder according to claim 3, **characterized in that** it comprises by dry weight of the binder, 71 ± 2% of magnesian spinel, 18 ± 2% CA and 11 ±2% CA₂.

5. Binder according to any one of claims 1 to 4, **characterized in that** it is quasi-free from free residual MgO, at least as it can be observed on X-ray diffraction spectrum for the binder.

6. Binder according to any one of claims 1 to 5, **characterized in that** it has the following chemical composition by dry weight of the binder:
- lime CaO : 4 to 12%
- magnesia MgO : 19 to 23%
- alumina Al₂O₃ : 69 to 74%.

7. Binder according to claim 6, **characterized in that** it has the following chemical composition by dry weight of the binder:
- lime CaO : 8.4%
- magnesia MgO : 20.4%
- alumina Al₂O₃ : 71.2%.

8. Binder according to any one of claims 1 to 7, **characterized in that** it comprises a SiO₂ content of less than 0.5% of the binder by dry weight.

9. Binder according to any one of claims 1 to 8, **characterized in that** it has a Blaine area surface at least equal to 3000 cm²/g.

10. Use of a binder according to any one of claims 1 to 9 for producing a refractory concrete.

11. Use of a binder according to claim 10, **characterized in that** the binder is complemented by magnesian spinel, preferentially of large size, so that the concrete contains between 20% and 30% of magnesian spinel by dry weight of the concrete.

12. Use of a binder according to claim 11, **characterized in that** the concrete is produced by mixing by dry weight of the binder:
- between 16 and 27% of the binder,
- between 2 and 13% of fine reactive alumina,
- between 0 and 19% of large spinel, and
- between 52 and 71% of alumina granulates,
and preferably:
- 18% of the binder,
- 11 % of reactive fine alumina,
- 11 % of large spinel, and
- 60% of alumina granulates.

13. Use of a binder according to any one of claims 10 to 12, **characterized in that** it is used in the manufacture of steel ladles (1), preferably for wear linings (5) of such steel ladles (1).

14. Process for producing a binder according to any one of claims 1 to 9, **characterized in that** the binder is made through frittering by burning of a blend of raw materials comprising dolomite, alumina and magnesia.

15. Process according to claim 14, **characterized in that** dolomite is natural.

16. Process according to any one of claims 14 or 15, **characterized in that** alumina is metallurgical.

17. Process according to any one of claims 14 to 16, **characterized in that** magnesia is reactive, preferably caustic, and has advantageously a grain size 100% lower than 100 µm, preferably lower than 40 µm.

18. Process according to any one of claims 14 to 17, **characterized in that**, before burning, the raw materials are milled up to a grain size corresponding to a 2% maximum rejection in a sieve of 65 µm.

19. Process according to any one of claims 14 to 18, **characterized in that** burning is carried out at a temperature comprised between 1400°C and 1600°C.

20. Process according to any one of claims 14 to 19, **characterized in that** the degree of progression of the burning is evaluated by measuring the free magnesia content by dry weight of the mixture.
